# EUROPÄISCHE PATENTANMELDUNG

(11) **EP 4 049 917 A1**
(43) Veröffentlichungstag der Anmeldung: **31.08.2022**
(21) Anmeldenummer: 22154978.5
(22) Anmeldetag: 03.02.2022
(51) Int. Cl.: B62D 15/02

(54) **VERFAHREN ZUM UNTERSTÜTZEN EINES FAHRERS BEI EINEM MANUELLEN PARKVORGANG EINES KRAFTFAHRZEUGS SOWIE KRAFTFAHRZEUG**

(30) Priorität: 26.02.2021 DE 102021201866
(71) Anmelder: VOLKSWAGEN AG, 38440 Wolfsburg (DE)
(72) Erfinder: Göricke, Bastian, 38446 Wolfsburg (DE); Hüger, Philipp, 38471 Rühen (DE)

(57) **Zusammenfassung**

Die Erfindung betrifft ein Verfahren zum Unterstützen eines Fahrers bei einem manuellen Parkvorgang eines Kraftfahrzeugs (14), bei welchem mittels einer elektronischen Recheneinrichtung (20) eine Zielparklücke (16) und eine Position (18) des Kraftfahrzeugs (14) ermittelt werden, wenigstens eine Fahreinstellung des Kraftfahrzeugs (14) ermittelt wird, eine Erreichbarkeit der Zielparklücke (16) mit der wenigstens einen ermittelten Fahreinstellung ausgehend von der Position (18) ermittelt wird, und wenn ermittelt wird, dass die Zielparklücke (16) bei der wenigstens einen ermittelten Fahreinstellung ausgehend von der Position (18) unerreichbar ist, durch Aufbringen wenigstens eines Lenkmoments (28) auf eine Lenkeinrichtung des Kraftfahrzeugs (14) eine durch den Fahrer ausgelöste Betätigung der Lenkeinrichtung unterstützt wird.

## Beschreibung

Die Erfindung betrifft ein Verfahren zum Unterstützen eines Fahrers bei einem manuellen Parkvorgang eines Kraftfahrzeugs sowie ein Kraftfahrzeug.

Ein automatisches Parksystem, mittels welchem ein Kraftfahrzeug vollautomatisch geparkt werden kann ist aus der KR 20150038776 A bekannt. Hierbei ist es jedoch einem Fahrer des Kraftfahrzeugs nicht möglich, eine Quersteuerung und/oder eine Längssteuerung des Kraftfahrzeugs bei dem Einparkvorgang zu übernehmen.

Die DE 10 2013 214 660 A1 offenbart ein Verfahren zur Unterstützung eines Fahrers eines Fahrzeugs bei einem Einparkmanöver in eine Parklücke. Sowohl die Längsführung als auch die Querführung des Fahrzeugs kann vom Fahrer durchgeführt werden. In diesem Fall werden dem Fahrer Hinweise zu notwendigen Aktionen, insbesondere zum Anhalten und Wechsel von Vorwärtsfahrt zu Rückwärtsfahrt und zu notwendigen Lenkbewegungen gegeben. Die Hinweise können durch Aufbringen eines Moments auf das Lenkrad erfolgen.

Weiterhin offenbart die DE 10 2010 049 585 A1 ein Verfahren zur Unterstützung eines Fahrzeugführers eines Fahrzeugs bei einem Parkmanöver, wobei eine Solltrajektorie zur Erreichung einer Parkposition ermittelt wird und dem Fahrzeugführer durch eine haptische Rückkopplung vermittelt wird, ob er sich entlang der Solltrajektorie bewegt. Dabei wird ein auf eine Lenkung des Fahrzeugs einwirkendes Zusatzlenkmoment derart generiert, dass Lenkbewegungen entlang der Solltrajektorie unterstützt werden und von der Solltrajektorie abweichenden Lenkbewegungen entgegengewirkt wird.

Überdies offenbart die DE 10 2005 062 086 A1 ein Verfahren zum Ermitteln der Befahrbarkeit einer Parklücke. Hierbei wird durch Kennfelder ein gültiger Bereich angegeben, von dem aus das Einparken des Fahrzeugs in die Parklücke möglich ist.

Händisches und somit manuelles Einparken eines Kraftfahrzeugs erfordert Training beziehungsweise Erfahrung des Fahrers des Kraftfahrzeugs. Gerade bei kleinen Längsparklücken oder beim Querparken kann sich ein Fahrer schnell verschätzen und zu früh oder zu spät einlenken. Gerade beim Längsparken kann dies zu einem Abbruch eines Parkvorgangs oder zu einem schlechten Parkergebnis, beispielsweise aufgrund eines zu großen Abstands zu einem Bordstein, führen.

Aufgabe der vorliegenden Erfindung ist es, eine Lösung zu schaffen, mittels welcher ein Fahrer eines Kraftfahrzeugs bei einem manuellen Parkvorgang unterstützt werden kann.

Diese Aufgabe wird erfindungsgemäß durch die Gegenstände der unabhängigen Patentansprüche gelöst. Weitere mögliche Ausgestaltungen der Erfindung sind in den Unteransprüchen, der Beschreibung und den Figuren offenbart.

Die Erfindung betrifft ein Verfahren zum Unterstützen eines Fahrers bei einem manuellen Parkvorgang eines Kraftfahrzeugs, insbesondere eines Kraftwagens, insbesondere eines Personenkraftwagens. Bei dem manuellen Parkvorgang ist es vorgesehen, dass das Kraftfahrzeug von dem Fahrer längs- und/oder quergesteuert wird. Bei dem Verfahren ist es vorgesehen, dass eine Zielparklücke und eine Position des Kraftfahrzeugs ermittelt werden. Hierbei kann die Position des Kraftfahrzeugs insbesondere in Relation zu der Zielparklücke ermittelt werden. Die Zielparklücke und/oder die Position des Kraftfahrzeugs können insbesondere mittels einer Erfassungseinrichtung des Kraftfahrzeugs ermittelt werden. Dabei kann die Erfassungseinrichtung beispielsweise eine Kamera und/oder ein Lidar und/oder ein Radar und/oder Ultraschallsensoren umfassen. Alternativ oder zusätzlich kann die Position des Kraftfahrzeugs über ein globales Navigationssatellitensystem ermittelt werden. Bei dem Verfahren ist es weiterhin vorgesehen, dass wenigstens eine Fahreinstellung des Kraftfahrzeugs ermittelt wird. Durch die wenigstens eine Fahreinstellung des Kraftfahrzeugs kann eine Fahrbewegung des Kraftfahrzeugs vorgegeben sein. Somit charakterisiert die wenigstens eine Fahreinstellung eine Fahreigenschaft des Kraftfahrzeugs.

Weiterhin ist es bei dem Verfahren vorgesehen, dass mittels der elektronischen Recheneinrichtung eine Erreichbarkeit der Zielparklücke mit der wenigstens einen ermittelten Fahreinstellung des Kraftfahrzeugs ausgehend von der Position ermittelt wird. Es wird somit ermittelt, ob das Kraftfahrzeug mit der durch die wenigstens eine Fahreinstellung vorgegebenen Fahrbewegung die Zielparklücke in einem Zug erreichen kann. Wird ermittelt, dass die Zielparklücke bei der wenigstens einen ermittelten Fahreinstellung ausgehend von der Position für das Kraftfahrzeug unerreichbar ist und somit ein Einparken des Kraftfahrzeugs in die Zielparklücke in einem Zug bei der derzeitigen wenigstens einen Fahreinstellung nicht möglich ist, dann wird durch Aufbringen wenigstens eines Lenkmoments auf eine Lenkeinrichtung des Kraftfahrzeugs eine durch den Fahrer ausgelöste Betätigung der Lenkeinrichtung unterstützt.

Es wird somit bei Ermitteln der Unerreichbarkeit der Zielparklücke in einem Zug mit der wenigstens einen ermittelten Fahreinstellung das wenigstens eine Lenkmoment auf die Lenkeinrichtung aufgebracht, mittels welchem eine durch den Fahrer ausgelöste Lenkbewegung unterstützt wird. Durch das Lenkmoment kann somit der Fahrer dazu angeregt werden, eine Lenkbewegung mittels der Lenkeinrichtung in eine durch das Lenkmoment vorgegebene Richtung vorzunehmen, um zu ermöglichen, dass mittels des Kraftfahrzeugs die Zielparklücke in einem Zug erreicht werden kann. Das wenigstens eine auf die Lenkeinrichtung aufgebrachte Lenkmoment kann insbesondere in Abhängigkeit davon eingestellt werden, wie die wenigstens eine ermittelte Fahreigenschaft des Kraftfahrzeugs angepasst werden müsste, um ausgehend von der jeweiligen Position des Kraftfahrzeugs das Erreichen der Zielparklücke in einem Zug zu ermöglichen. Über das bereitgestellte wenigstens eine Lenkmoment wird somit der Fahrer dazu angeregt, die wenigstens eine Fahreinstellung des Kraftfahrzeugs anzupassen, wodurch eine Erreichbarkeit der Zielparklücke ausgehend von der Position des Kraftfahrzeugs mit der angepassten wenigstens einen Fahreinstellung ermöglicht wird.

Mittels des auf die Lenkeinrichtung aufgebrachten wenigstens einen Lenkmoments kann eine Kraft, welche zur Betätigung der Lenkeinrichtung durch den Fahrer aufzubringen ist, im Vergleich zu einer Ausgangskraft reduziert werden, wodurch der Fahrer beim Lenken des Kraftfahrzeugs unterstützt werden kann. Hierbei kann das wenigstens eine Lenkmoment beispielsweise durch ein Hydrauliksystem und/oder einen Elektromotor bereitgestellt werden.

Wird festgestellt, dass die Zielparklücke bei der wenigstens einen ermittelten Fahreinstellung ausgehend von der Position des Kraftfahrzeugs für das Kraftfahrzeug in einem Zug erreichbar ist, dann kann das Bereitstellen des wenigstens einen Lenkmoments unterbleiben. Bei Feststellen der Erreichbarkeit der Zielparklücke ausgehend von der jeweiligen Position des Kraftfahrzeugs und der wenigstens einen ermittelten Fahreinstellung in einem Zug wird festgestellt, dass der Fahrer das Kraftfahrzeug ausreichend im Griff hat, um den Einparkvorgang, insbesondere das Quersteuern des Kraftfahrzeugs beim Einparkvorgang, vollständig zu übernehmen. Bei dem Verfahren wird somit dem Fahrer des Kraftfahrzeugs ein manuelles Einparken des Kraftfahrzeugs ermöglicht, wobei der Fahrer durch das Bereitstellen des wenigstens einen Lenkmoments für den Fahrer besonders komfortabel beim Quersteuern des Kraftfahrzeugs unterstützt werden kann.

In einer Weiterbildung der Erfindung ist es vorgesehen, dass als jeweiliges Lenkmoment ein eine Lenkbewegung verstärkendes Lenkmoment oder eine Lenkbewegung erschwerendes Lenkmoment auf die Lenkeinrichtung aufgebracht wird. Mittels des wenigstens einen erschwerenden Lenkmoments kann somit eine erste Lenkbewegung des Fahrers erschwert werden und mittels des unterstützenden Lenkmoments kann eine der ersten Lenkbewegung entgegengesetzte zweite Lenkbewegung des Fahrers unterstützt werden. Somit kann über das wenigstens eine unterstützende Lenkmoment beziehungsweise das wenigstens eine erschwerende Lenkmoment der Fahrer dazu angeregt werden, eine Lenkeinrichtung des Kraftfahrzeugs in eine durch das wenigstens eine Lenkmoment vorgegebene Lenkrichtung anzupassen. Es können somit sowohl das wenigstens eine unterstützende als auch das wenigstens eine erschwerende Lenkmoment bereitgestellt werden, um den Fahrer dazu anzuregen, eine Lenkeinstellung des Kraftfahrzeugs in eine durch das unterstützende Lenkmoment für den Fahrer erleichterte Lenkrichtung anzupassen. Mittels des wenigstens einen Lenkmoments kann somit der Fahrer besonders sanft dazu angeregt werden, die ermittelte Fahreinstellung auf eine durch das wenigstens eine aufgebrachte Lenkmoment vorgegebene Art anzupassen, um das Erreichen der Zielparklücke in einem Zug mittels der angepassten Fahreinstellung des Kraftfahrzeugs zu ermöglichen.

In weiterer Ausgestaltung der Erfindung ist es vorgesehen, dass in Abhängigkeit von der wenigstens einen ermittelten Fahreinstellung eine Umgebung des Kraftfahrzeugs in wenigstens zwei unterschiedliche Bereiche eingestellt wird. Hierbei charakterisiert ein erster Bereich die Erreichbarkeit der Zielparklücke für die wenigstens eine ermittelte Fahreinstellung und der zweite Bereich charakterisiert eine Unerreichbarkeit der Zielparklücke für die wenigstens eine ermittelte Fahreinstellung. Die Umgebung des Kraftfahrzeugs wird somit derart in die wenigstens zwei Bereiche eingeteilt, dass sämtliche Positionen, ausgehend von welchen das Kraftfahrzeug mit der wenigstens einen ermittelten Fahreinstellung in einem Zug die Zielparklücke erreichen kann, den ersten Bereich bilden und sämtliche Positionen des Kraftfahrzeugs, ausgehend von welchen das Kraftfahrzeug die Zielparklücke mit der wenigstens einen ermittelten Fahreinstellung nicht in einem Zug erreichen kann, den zweiten Bereich bilden. Hierbei können lediglich derartige mögliche Positionen des Kraftfahrzeugs den zweiten Bereich bilden, ausgehend von welchen die Zielparklücke unter Anpassen der wenigstens einen ermittelten Fahreinstellung in einem Zug erreichbar ist. Es ist weiterhin vorgesehen, dass mittels der elektronischen Recheneinrichtung ermittelt wird, in welchem der Bereiche sich das Kraftfahrzeug befindet. Hierfür kann eine Position des Kraftfahrzeugs ermittelt werden. Unter der Position des Kraftfahrzeugs kann insbesondere eine Position eines Referenzpunkts des Kraftfahrzeugs zu verstehen sein. Das Bereitstellen des Lenkmoments für die Lenkeinrichtung wird ausgelöst, wenn festgestellt wird, dass sich das Kraftfahrzeug in dem zweiten Bereich befindet. Weiterhin unterbleibt das Bereitstellen des Lenkmoments wenn festgestellt wird, dass sich das Kraftfahrzeug in dem ersten Bereich befindet.

Es kann somit als der erste Bereich ein erster Korridor ermittelt werden, innerhalb welchem mit der wenigstens einen ermittelten aktuellen Fahreinstellung des Kraftfahrzeugs die Zielparklücke ausgehend von der in dem ersten Bereich angeordneten Position des Kraftfahrzeugs ohne Unterstützung in einem Zug erreicht werden kann. Somit unterbleibt das Bereitstellen der Unterstützung des aufgebrachten wenigstens einen Lenkmoments wenn ermittelt wird, dass sich das Kraftfahrzeug in dem ersten Bereich befindet. Der den ersten Bereich repräsentierende erste Korridor kann sich bis in die Zielparklücke hinein erstrecken. Bei dem Verfahren kann weiterhin ein den zweiten Bereich repräsentierender, den ersten Korridor umgebender zweiter Korridor ermittelt werden. Bei Ermitteln einer Anordnung des Kraftfahrzeugs in dem zweiten Korridor, innerhalb welchem das Kraftfahrzeug mit der wenigstens einen ermittelten aktuellen Fahreinstellung die Zielparklücke lediglich mit Unterstützung in einem Zug erreichen kann, wird der Fahrer des Kraftfahrzeugs durch Bereitstellen des wenigstens einen Lenkmoments beim Steuern des Kraftfahrzeugs unterstützt. Über das Einteilen der Umgebung des Kraftfahrzeugs in Bereiche kann besonders schnell und einfach ermittelt werden, ob bei einer geänderten Position des Kraftfahrzeugs bei jeweiligen gleichbleibenden Fahreinstellungen die Erreichbarkeit der Zielparklücke weiterhin gegeben ist.

Es kann hierbei in einer Weiterbildung vorgesehen sein, dass in der Umgebung des Kraftfahrzeugs zusätzlich ein dritter Bereich vorgesehen ist, welcher eine Unerreichbarkeit der Zielparklücke unabhängig von der ermittelten Fahreinstellung in einem Zug charakterisiert. Das bedeutet, dass bei einer Position des Kraftfahrzeugs in dem dritten Bereich egal bei welcher Fahreinstellung des Kraftfahrzeugs die Zielparklücke für das Kraftfahrzeug nicht in einem einzigen Zug zu erreichen ist. Das Einteilen der Umgebung in den ersten Bereich, den zweiten Bereich und den dritten Bereich ermöglicht somit, dass besonders einfach und schnell mittels der elektronischen Recheneinrichtung festgestellt werden kann, ob eine Unterstützung des Fahrers beim Einparken des Kraftfahrzeugs in die Zielparklücke notwendig, sinnvoll und für ein Erreichen der Zielparklücke ausreichend ist. In Abhängigkeit davon kann mittels der elektronischen Recheneinrichtung entschieden werden, ob für ein Unterstützen des Fahrers beim Parken des Kraftfahrzeugs das wenigstens eine Lenkmoment auf die Lenkeinrichtung des Kraftfahrzeugs aufzubringen ist.

In weiterer Ausgestaltung der Erfindung ist es vorgesehen, dass mittels einer Ausgabeeinrichtung die ermittelten Bereiche ausgegeben werden. Hierbei kann die Ausgabeeinrichtung insbesondere Teil des Kraftfahrzeugs sein. Somit kann die Ausgabeeinrichtung dazu eingerichtet sein, die ermittelten Bereiche im Innenraum des Kraftfahrzeugs auszugeben. Über das Ausgeben der ermittelten Bereiche mittels der Ausgabeeinrichtung im Innenraum des Kraftfahrzeugs kann ein Fahrzeuginsasse des Kraftfahrzeugs, insbesondere der Fahrer des Kraftfahrzeugs besonders einfach über eine jeweilige ermittelte Erreichbarkeit der Zielparklücke mit jeweiligen aktuell eingestellten Fahreinstellungen des Kraftfahrzeugs informiert werden.

In weiterer Ausgestaltung der Erfindung ist es vorgesehen, dass wenigstens einer der Bereiche in Abhängigkeit von einem einzuhaltenden vorgegebenen Sicherheitsabstand zu wenigstens einem ermittelten Objekt eingeteilt wird. Beim Ermitteln der Erreichbarkeit der Zielparklücke ausgehend von der jeweiligen aktuellen Position des Kraftfahrzeugs in einem Zug mit der wenigstens einen ermittelten Fahreinstellung, kann somit eine Position sowie eine Erstreckung des wenigstens einen Objekts und gegebenenfalls zusätzlich der vorgegebene Sicherheitsabstand zu dem Objekt miteinbezogen werden. Es wird somit mittels der elektronischen Recheneinrichtung ermittelt, ob die Zielparklücke ausgehend von der jeweiligen aktuellen Position des Kraftfahrzeugs mit der wenigstens einen ermittelten Fahreinstellung unter Vermeidung einer Kollision mit dem wenigstens einen Objekt beziehungsweise unter Einhaltung des wenigstens einen für das Objekt vorgegebenen Sicherheitsabstands in einem Zug erreichbar ist. Beispielsweise könnte ein Erreichen der Zielparklücke ausgehend von einer aktuellen Position des Kraftfahrzeugs mit der wenigstens einen ermittelten Fahreinstellung unter Verletzung des wenigstens einen vorgegebenen Sicherheitsabstands zu dem Objekt möglich sein. Um zu vermeiden, dass der Sicherheitsabstand zu dem wenigstens einen Objekt durch das Kraftfahrzeug beim Einparken des Kraftfahrzeugs in die Zielparklücke verletzt wird und infolgedessen gegebenenfalls eine Kollision mit dem wenigstens einen weiteren Objekt auftritt, kann festgestellt werden, dass die Erreichbarkeit der Zielparklücke ausgehend von der aktuellen Position des Kraftfahrzeugs mit der wenigstens einen ermittelten Fahreinstellung in einem Zug unter Einhaltung des Sicherheitsabstands nicht möglich ist. Infolgedessen kann beispielsweise festgestellt werden, dass sich das Kraftfahrzeug in dem zweiten Bereich befindet. In Folge des Ermittelns, dass sich das Kraftfahrzeug in dem zweiten Bereich befindet, kann mittels der elektronischen Recheneinrichtung der Fahrer des Kraftfahrzeugs durch Aufbringen des wenigstens einen Lenkmoments auf die Lenkeinrichtung beim Steuern des Kraftfahrzeugs unterstützt werden, wodurch ein Einparken in die Zielparklücke ausgehend von der aktuellen Position des Kraftfahrzeugs mit der wenigstens einen angepassten Fahreinstellung des Kraftfahrzeugs in einem Zug unter Einhaltung des Sicherheitsabstands zu dem wenigstens einen Objekt ermöglicht wird.

Es kann in weiterer Ausgestaltung der Erfindung vorgesehen sein, dass das Bereitstellen des Lenkmoments unterbleibt, wenn ermittelt wird, dass die Zielparklücke ausgehend von der Position des Kraftfahrzeugs unabhängig von der ermittelten Fahreinstellung unerreichbar ist. Mit anderen Worten kann das Bereitstellen des wenigstens einen Lenkmoments und somit das Aufbringen des wenigstens einen Lenkmoments auf die Lenkeinrichtung unterbunden werden, wenn ermittelt wird, dass sich das Kraftfahrzeug in dem dritten Bereich befindet. Wird somit festgestellt, dass auch bei einer möglichen Unterstützung des Fahrers des Kraftfahrzeugs die Zielparklücke ausgehend von der aktuellen Position des Kraftfahrzeugs nicht in einem Zug erreicht werden kann, dann unterbleibt die Unterstützung des Fahrers. Hierdurch wird vermieden, dass dem Fahrer suggeriert wird, dass durch Anpassen der wenigstens einen Fahreinstellung die Zielparklücke doch noch für das Kraftfahrzeug in einem Zug erreicht werden könnte.

In weiterer Ausgestaltung der Erfindung kann es vorgesehen sein, dass bei einer ermittelten Anpassung der wenigstens einen ermittelten Fahreinstellung und/oder der Position des Kraftfahrzeugs die ermittelte Erreichbarkeit der Zielparklücke angepasst wird. Hierdurch kann dauerhaft während eines Bewegens des Kraftfahrzeugs, insbesondere während eines Einparkvorgangs, überprüft werden, ob die jeweiligen aktuellen Fahreinstellungen für das Erreichen der Zielparklücke in einem Zug ausreichend sind. Ändert somit der Fahrer des Kraftfahrzeugs eine Lenkeinstellung der Lenkeinrichtung des Kraftfahrzeugs und/oder ändert sich eine Position des Kraftfahrzeugs relativ zu der Zielparklücke aufgrund eines Fahrens des Kraftfahrzeugs dann können die jeweiligen Bereiche angepasst werden und/oder die ermittelte Anordnung des Kraftfahrzeugs in einem der Bereiche überprüft beziehungsweise angepasst werden. Somit kann der Fahrer während des gesamten manuellen Parkvorgangs besonders gut mittels des Verfahrens unterstützt werden.

In weiterer Ausgestaltung der Erfindung ist es vorgesehen, dass als die Fahreinstellung ein eingestellter Lenkeinschlag und/oder ein maximal möglicher Lenkeinschlag und/oder ein eingelegter Gang und/oder ein Abstand des Kraftfahrzeugs ermittelt wird. Der eingestellte Lenkeinschlag sowie der Radstand des Kraftfahrzeugs beeinflussen einen Bewegungsablauf des Kraftfahrzeugs bei einer Kurvenfahrt des Kraftfahrzeugs. Der maximal mögliche Lenkeinschlag gibt jeweilige Grenzen für eine Kurvenfahrt des Kraftfahrzeugs vor, wobei in Abhängigkeit von dem maximal möglichen Lenkeinschlag ermittelt werden kann, ob durch Anpassen des jeweiligen eingestellten Lenkeinschlags in dem Kraftfahrzeug bis zu dem maximal möglichen Lenkeinschlag die Zielparklücke für das Kraftfahrzeug ausgehend von seiner Position in einem Zug erreichbar ist. Der maximal mögliche Lenkeinschlag kann somit eine Grenze zwischen dem zweiten Bereich und dem dritten Bereich vorgeben. Der jeweils in dem Kraftfahrzeug eingelegte Gang definiert, ob das Kraftfahrzeug eine Vorwärtsfahrt oder eine Rückwärtsfahrt ausführt beziehungsweise bei einer Beschleunigung des Kraftfahrzeugs ausführen wird. Über den eingestellten Lenkeinschlag und/oder den maximal möglichen Lenkeinschlag und/oder den eingelegten Gang und/oder den Radstand des Kraftfahrzeugs kann ausgehend von der jeweiligen Position des Kraftfahrzeugs eine mögliche Bewegungstrajektorie, insbesondere eine Schar an möglichen Bewegungstrajektorien ermittelt werden und in Abhängigkeit von der ermittelten Bewegungstrajektorie beziehungsweise der ermittelten Schar an Bewegungstrajektorien die Erreichbarkeit der Zielparklücke für das Kraftfahrzeug ausgehend von seiner aktuellen Position in einem Zug mit den jeweiligen Fahreinstellungen besonders zuverlässig ermittelt werden.

Die Erfindung betrifft des Weiteren ein Kraftfahrzeug, welches dazu eingerichtet ist, ein Verfahren wie es bereits im Zusammenhang mit dem erfindungsgemäßen Verfahren zum Unterstützen des Fahrers bei einem manuellen Parkvorgang des Kraftfahrzeugs beschrieben worden ist, durchzuführen. Hierfür kann das Kraftfahrzeug eine elektronische Recheneinrichtung aufweisen, welche dazu eingerichtet ist, die Zielparklücke und die Position des Kraftfahrzeugs zu ermitteln. Weiterhin kann die elektronische Recheneinrichtung dazu eingerichtet sein, wenigstens eine Fahreinstellung des Kraftfahrzeugs zu ermitteln. Überdies ist die elektronische Recheneinrichtung dazu eingerichtet, eine Erreichbarkeit der Zielparklücke mit der wenigstens einen ermittelten Fahreinstellung ausgehend von der Position des Kraftfahrzeugs zu ermitteln. Außerdem ist die elektronische Recheneinrichtung dazu eingerichtet, durch Aufbringen wenigstens eines Lenkmoments auf eine Lenkeinrichtung des Kraftfahrzeugs eine durch den Fahrer ausgelöste Betätigung der Lenkeinrichtung zu unterstützen, wenn ermittelt wird, dass die Zielparklücke bei der wenigstens einen ermittelten Fahreinstellung ausgehend von der Position des Kraftfahrzeugs in einem Zug unerreichbar ist. Vorteile und vorteilhafte Weiterbildungen des erfindungsgemäßen Verfahrens sind als Vorteile und vorteilhafte Weiterbildungen des erfindungsgemäßen Kraftfahrzeugs anzusehen und umgekehrt.

Die Zeichnung zeigt in:

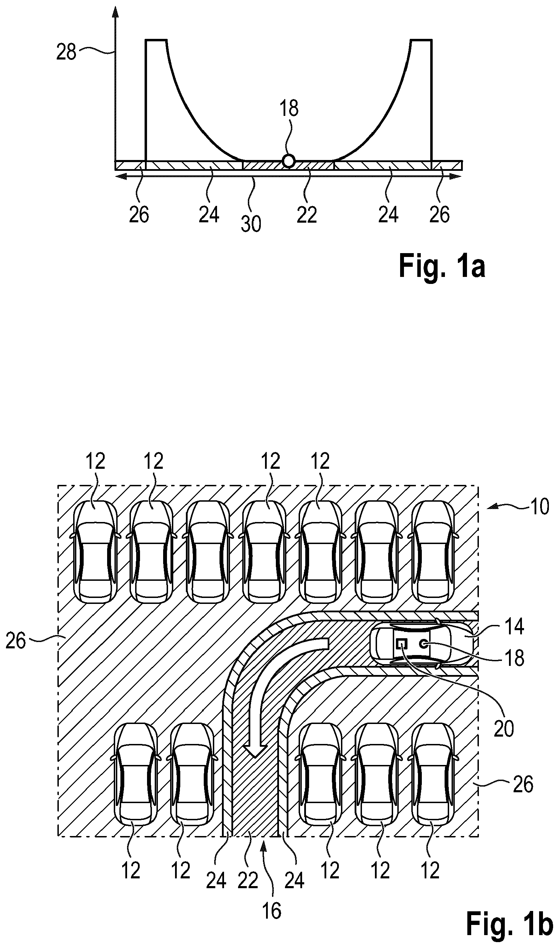

- Fig. 1a, 1b: eine schematische Draufsicht eines Parkplatzes in Fig. 1b, auf welchem ein Kraftfahrzeug angeordnet ist und auf welchem eine Zielparklücke für das Kraftfahrzeug vorgesehen ist, in welcher das Kraftfahrzeug einzuparken ist, wobei eine Umgebung des Kraftfahrzeugs in drei unterschiedliche Bereiche eingeteilt ist und in Abhängigkeit von einer Anordnung des Kraftfahrzeugs in den jeweiligen Bereichen für ein Unterstützen eines Fahrers des Kraftfahrzeugs ein Lenkmoment auf eine Lenkeinrichtung des Kraftfahrzeugs aufgebracht werden kann, und in Fig. 1a einen Graphen, in welchem ein als Lenkmoment auf die Lenkeinrichtung aufzubringendes Zusatzlenkmoment über einem Fahrbereich, in welchem sich das Kraftfahrzeug befindet, aufgetragen ist;

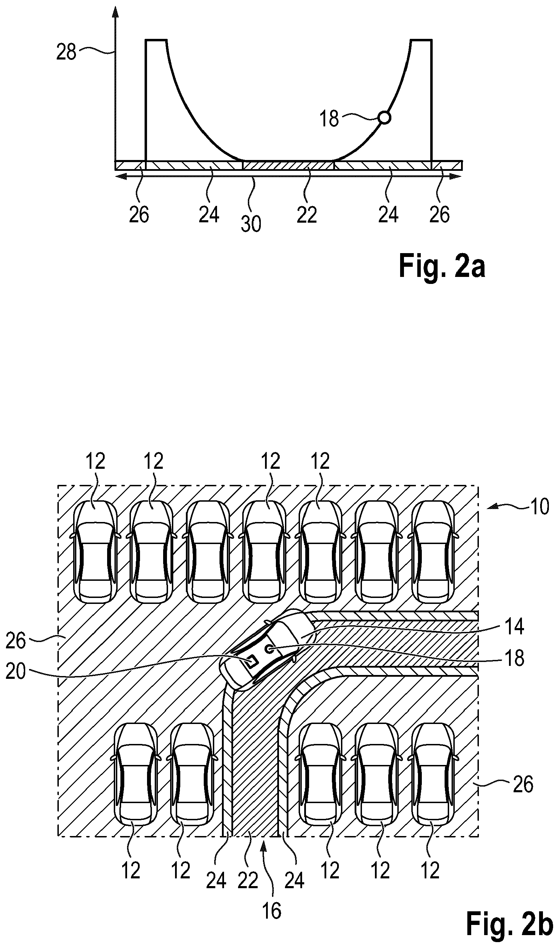

- Fig. 2a, 2b: eine weitere schematische Draufsicht des Parkplatzes in Fig. 2b, wobei das Kraftfahrzeug in einem der Bereiche angeordnet ist, in welchem der Fahrer des Kraftfahrzeugs beim Steuern des Kraftfahrzeugs durch Aufbringen des Lenkmoments auf die Lenkeinrichtung unterstützt wird, und in Fig. 2a einen Graphen, welcher darstellt, wie hoch ein auf die Lenkeinrichtung des Kraftfahrzeugs als Zusatzlenkmoment aufgebrachtes Lenkmoment für den ermittelten Fahrbereich des Kraftfahrzeugs ist;

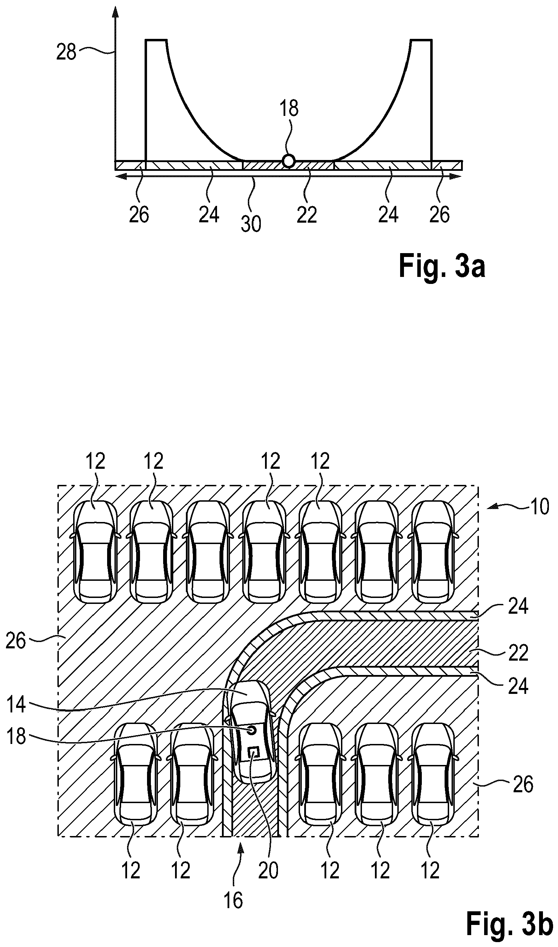

- Fig. 3a, 3b: eine weitere schematische Draufsicht des Parkplatzes in Fig. 3b, wobei das Kraftfahrzeug in einem Bereich angeordnet ist, für welchen davon ausgegangen wird, dass der Fahrer des Kraftfahrzeugs selbstständig und ohne Unterstützung mit derzeitigen Fahreinstellungen in einem Zug in der Zielparklücke einparken kann, und in Fig. 3a den Graphen, aus welchem erkannt werden kann, dass bei der derzeitigen Anordnung des Kraftfahrzeugs in dem Fahrbereich kein Zusatzlenkmoment zum Unterstützen des Fahrers bereitgestellt wird; und

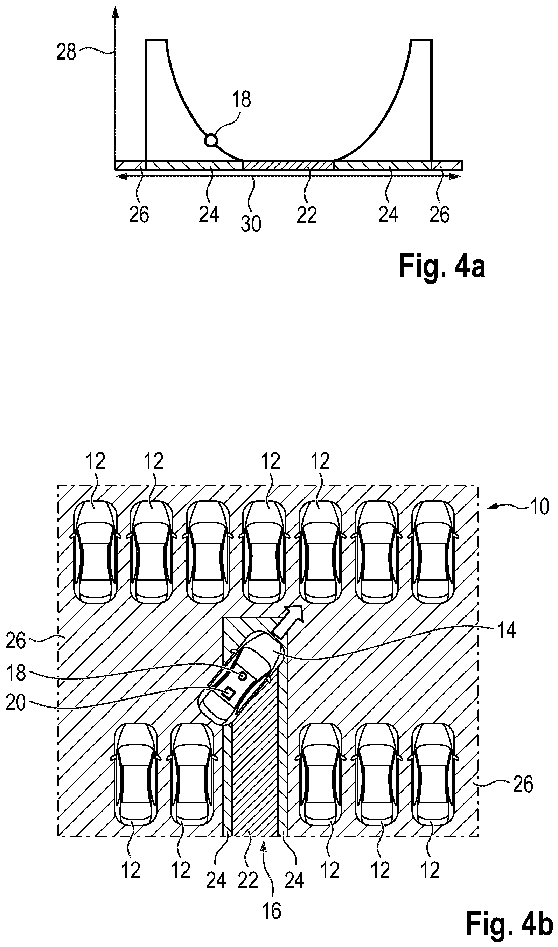

- Fig. 4a, 4b: eine weitere schematische Draufsicht des Parkplatzes in Fig. 4b, wobei das Kraftfahrzeug durch Rangieren in den Bereich bewegt wird, in welchem durch Unterstützen des Fahrers beim Steuern des Kraftfahrzeugs durch Aufbringen des Lenkmoments auf die Lenkeinrichtung des Kraftfahrzeugs der Fahrer das Kraftfahrzeug in einem weiteren Zug in die Zielparklücke einparken kann, und in Fig. 4a den Graphen, aus welchem das Zusatzlenkmoment erkannt werden kann, welches für den erreichten Fahrbereich des Kraftfahrzeugs als Lenkmoment auf die Lenkeinrichtung des Kraftfahrzeugs aufgebracht wird, um ein Einparken des Kraftfahrzeugs in die Zielparklücke in lediglich einem weiteren Zug zu ermöglichen.

Gleiche oder funktionsgleiche Elemente sind in den Figuren mit den gleichen Bezugszeichen versehen.

In den Figuren 1b, 2b, 3b und 4b ist jeweils in einer schematischen Draufsicht eine Parkfläche 10 gezeigt, auf welcher mehrere Fahrzeuge 12 angeordnet sind. Weiterhin ist auf der Parkfläche 10 ein Kraftfahrzeug 14 angeordnet, welches auf der Parkfläche 10 zu parken ist. Auf der Parkfläche 10 begrenzen die Fahrzeuge 12 eine Zielparklücke 16, in welcher das Kraftfahrzeug 14 einzuparken ist. Das Kraftfahrzeug 14 kann insbesondere manuell von einem Fahrer des Kraftfahrzeugs in die Zielparklücke 16 eingeparkt werden. Um ein besonders einfaches Einparken des Kraftfahrzeugs 14 in einem Zug in die Zielparklücke 16 zu ermöglichen, ist es vorgesehen, dass der Fahrer des Kraftfahrzeugs 14 bei einem manuellen Parkvorgang unterstützt werden kann. Um festzustellen, ob der Fahrer des Kraftfahrzeugs 14 die Unterstützung benötigt, werden die Zielparklücke 16 und eine Position 18 des Kraftfahrzeugs 14 ermittelt. Hierbei kann die Position 18 des Kraftfahrzeugs 14 durch einen Referenzpunkt des Kraftfahrzeugs 14 definiert sein.

Weiterhin ist es vorgesehen, dass wenigstens eine Fahreinstellung des Kraftfahrzeugs 14 ermittelt wird. Als die wenigstens eine Fahreinstellung des Kraftfahrzeugs 14 kann ein eingestellter Lenkeinschlag und/oder ein eingelegter Gang ermittelt werden. Weiterhin können alternativ oder zusätzlich ein maximal möglicher Lenkeinschlag und/oder ein Radstand des Kraftfahrzeugs 14 als unveränderliche Fahreinstellungen ermittelt werden, welche eine Fahreigenschaft des Kraftfahrzeugs 14 beeinflussen. Mittels einer elektronischen Recheneinrichtung 20 des Kraftfahrzeugs 14 kann eine Erreichbarkeit der Zielparklücke 16 ausgehend von der Position 18 des Kraftfahrzeugs 14 mit der wenigstens einen ermittelten Fahreinstellung in einem Zug ermittelt werden. Die elektronische Recheneinrichtung 20 ist vorliegend schematisch mit einem Kästchen gekennzeichnet. Mit anderen Worten wird mittels der elektronischen Recheneinrichtung 20 ermittelt, ob ausgehend von der jeweiligen Position 18 des Kraftfahrzeugs 14 bei der wenigstens einen ermittelten Fahreinstellung des Kraftfahrzeugs 14 das Einparken in der Zielparklücke 16 in einem einzigen Zug möglich ist.

Hierbei kann mittels der elektronischen Recheneinrichtung 20 eine Umgebung des Kraftfahrzeugs 14 in drei zueinander unterschiedliche Bereiche, einen ersten Bereich 22, einen zweiten Bereich 24 und einen dritten Bereich 26 eingeteilt werden. Der erste Bereich 22 ist dadurch definiert, dass bei einer Anordnung des Kraftfahrzeugs 14 mit dessen Position 18 in dem ersten Bereich 22 bei der ermittelten wenigstens einen Fahreinstellung des Kraftfahrzeugs 14 ein Einparken des Kraftfahrzeugs 14 in die Zielparklücke 16 möglich ist, ohne dass eine Unterstützung des Fahrers des Kraftfahrzeugs 14 nötig ist. Der zweite Bereich 24 ist dadurch definiert, dass bei einer Anordnung des Kraftfahrzeugs 14 mit seiner Position 18 in dem zweiten Bereich 24 die Zielparklücke 16 mit der wenigstens einen ermittelten Fahreinstellung des Kraftfahrzeugs 14 in einem Zug nicht erreichbar ist und somit eine Anpassung der wenigstens einen Fahreinstellung nötig ist, um ausgehend von der jeweiligen Position 18 des Kraftfahrzeugs 14 die Zielparklücke 16 zu erreichen. Hierbei ist ein Erreichen der Zielparklücke 16 durch das Kraftfahrzeug 14 bei der Anordnung des Kraftfahrzeugs 14 mit dessen Position 18 in dem zweiten Bereich 24 in einem Zug grundsätzlich möglich. Der dritte Bereich 26 ist dadurch definiert, dass bei einer Anordnung des Kraftfahrzeugs 14 mit dessen Position 18 in dem dritten Bereich 26 ein Einparken des Kraftfahrzeugs 14 in der Zielparklücke 16 in einem Zug unabhängig von jeweiligen Fahreinstellungen des Kraftfahrzeugs 14 unmöglich ist. Hierbei ist unter der Unmöglichkeit des Einparkens des Kraftfahrzeugs 14 in der Zielparklücke 16 in einem Zug zu verstehen, dass ein kollisionsfreies Einparken des Kraftfahrzeugs 14 in der Zielparklücke 16 nicht möglich ist.

Insbesondere können die Bereiche in Abhängigkeit von einer regelungstechnisch besten Trajektorie und/oder in Abhängigkeit von einer für einen Fahrer des Kraftfahrzeugs 14 komfortabelsten Trajektorie eingeteilt werden. Die jeweiligen Bereiche können somit in Abhängigkeit von einer menschlichen Fahrweise eingeteilt werden, wodurch beim Unterstützen des manuellen Parkvorgangs des Fahrers ein menschliches Verhalten durch das Bereitstellen des Zusatzmoments nachempfunden werden soll.

In Abhängigkeit von der jeweiligen Anordnung des Kraftfahrzeugs 14 mit seiner Position 18 in den jeweiligen Bereichen kann der Fahrer des Kraftfahrzeugs 14 beim manuellen Parkvorgang durch Aufbringen wenigstens eines Lenkmoments auf eine Lenkeinrichtung des Kraftfahrzeugs 14 bei einer durch den Fahrer ausgelösten Betätigung der Lenkeinrichtung unterstützt werden. Das für ein Unterstützen des Fahrers bereitgestellte Lenkmoment kann von einem Fahrer für die jeweiligen Bereiche vorgegeben sein. In den Figuren 1a, 2a, 3a und 4a sind jeweilige Graphen dargestellt, bei welchen ein für die Unterstützung des Fahrers bei dem Parkvorgang auf die Lenkeinrichtung aufgebrachtes Lenkmoment als Zusatzlenkmoment 28 über einem Fahrbereich 30 aufgetragen ist. Bei dem ersten Bereich 22, dem zweiten Bereich 24 und dem dritten Bereich 26 handelt es sich um jeweilige Fahrbereiche. Es kann somit in den jeweiligen Graphen abgelesen werden, wie hoch ein jeweiliges auf die Lenkeinrichtung aufgebrachtes zusätzliches Lenkmoment für ein Unterstützen des Fahrers beim Steuern des Kraftfahrzeugs 14 bei der Anordnung des Kraftfahrzeugs 14 in dem jeweiligen Fahrbereich 30 ist.

Bei der in Fig. 1b gezeigten Situation befindet sich das Kraftfahrzeug 14 mit seiner Position 18 in dem ersten Bereich 22, sodass ein Aufbringen des wenigstens einen Lenkmoments auf die Lenkeinrichtung des Kraftfahrzeugs 14 unterbleibt. Bei der Anordnung des Kraftfahrzeugs 14 mit seiner Position 18 in dem ersten Bereich 22 wird angenommen, dass der Fahrer das Kraftfahrzeug 14 ohne Unterstützung sicher in einem Zug in der Zielparklücke 16 anordnen kann. Bei der in Fig. 2b gezeigten Situation hat der Fahrer das Kraftfahrzeug 14 mit seiner Position 18 in den zweiten Bereich 24 navigiert, in welchem ein Einparken des Kraftfahrzeugs 14 in der Zielparklücke 16 bei derzeitigen Fahreinstellungen in einem Zug nicht möglich ist. Es wird somit wie im zugehörigen Graphen in Fig. 2a erkannt werden kann als Zusatzlenkmoment 28 das wenigstens eine Lenkmoment auf die Lenkeinrichtung des Kraftfahrzeugs 14 aufgebracht, welches die durch den Fahrer ausgelöste Betätigung der Lenkeinrichtung verstärken kann, um den Fahrer beim manuellen Parkvorgang des Kraftfahrzeugs 14 zu unterstützen. Hierbei kann ein eine Lenkbewegung verstärkendes Lenkmoment und/oder ein eine Lenkbewegung erschwerendes Lenkmoment auf die Lenkeinrichtung aufgebracht werden. Insbesondere kann in eine erste Lenkrichtung ein eine Lenkbewegung erleichterndes und in die entgegengesetzte zweite Lenkrichtung ein die Lenkbewegung erschwerendes Lenkmoment auf die Lenkeinrichtung aufgebracht werden. Um ein weiteres Einlenken des Kraftfahrzeugs 14 in die zweite Lenkrichtung zu vermeiden, kann eine Vibration des Lenkrads ausgelöst werden und/oder ein Ruck des Lenkrads ausgelöst werden. Hierdurch kann der Fahrer des Kraftfahrzeugs 14 dazu angeregt werden, das Kraftfahrzeug 14 in die erleichterte erste Lenkrichtung zu lenken, wodurch das Einparken des Kraftfahrzeugs 14 in einem Zug in der Zielparklücke 16 ermöglicht wird. Durch Unterstützen des Fahrers mittels des auf die Lenkeinrichtung aufgebrachten Lenkmoments kann bei einem weiteren Bewegen des Kraftfahrzeugs 14 das Kraftfahrzeug 14 zurück in den ersten Bereich 22 bewegt werden, wie es in Fig. 3b gezeigt ist. Sobald das Kraftfahrzeug 14 mit seiner Position 18 wieder in dem ersten Bereich 22 angeordnet ist, unterbleibt ein weiteres Unterstützen des Fahrers des Kraftfahrzeugs 14 durch Aufbringen eines Lenkmoments auf die Lenkeinrichtung.

In Fig. 4b ist eine Situation gezeigt, in welcher der Fahrer des Kraftfahrzeugs 14 eine Positionskorrektur des Kraftfahrzeugs 14 durchführt, um das Kraftfahrzeug 14 in dem ersten Bereich 22 anzuordnen. Somit kann mittels der elektronischen Recheneinrichtung 20 der Fahrer des Kraftfahrzeugs 14 bei einem zweizügigen Einparken in die Zielparklücke 16 unterstützt werden.

Bei dem Verfahren wird somit ermittelt, in welchem der Bereiche sich das Kraftfahrzeug 14 befindet. Wird festgestellt, dass sich das Kraftfahrzeug 14 in dem zweiten Bereich 24 befindet, dann wird das Bereitstellen des Lenkmoments für die Lenkeinrichtung ausgelöst. Wird mittels der elektronischen Recheneinrichtung 20 festgestellt, dass sich das Kraftfahrzeug 14 in dem ersten Bereich 22 befindet, dann unterbleibt das Bereitstellen des Lenkmoments für die Lenkeinrichtung des Kraftfahrzeugs 14. Um einen Fahrer besonders einfach darüber informieren zu können, in welchem der Bereiche sich das Kraftfahrzeug 14 jeweils mit seiner Position 18 befindet, kann in dem Kraftfahrzeug 14 eine in den Figuren nicht gezeigte Ausgabeeinrichtung vorgesehen sein, mittels welcher die ermittelten Bereiche sowie die Position 18 des Kraftfahrzeugs 14 relativ zu den jeweiligen ermittelten Bereichen ausgegeben werden können.

Um eine Gefahr einer Kollision bei dem manuellen Parkvorgang besonders gering zu halten, kann ein jeweiliges Einteilen der Bereiche in Abhängigkeit von wenigstens einem Objekt, insbesondere einem zu dem wenigstens einen Objekt einzuhaltenden Sicherheitsabstand ermittelt werden. Vorliegend können die Bereiche in Abhängigkeit von jeweiligen Positionen der Fahrzeuge 12 sowie den jeweiligen zu den Fahrzeugen 12 einzuhaltenden Sicherheitsabständen eingeteilt werden. Hierdurch kann eine Gefahr einer Kollision des Kraftfahrzeugs 14 mit den Fahrzeugen 12 beim Einparken in die Zielparklücke 16 besonders gering gehalten werden. Die jeweiligen Bereiche können bei einer Änderung wenigstens einer Fahreinstellung des Kraftfahrzeugs 14 und/oder bei einer Änderung der Position 18 des Kraftfahrzeugs 14 neu ermittelt beziehungsweise angepasst werden.

Für das Unterstützen des Fahrers beim Steuern des Kraftfahrzeugs 14 kann bei einer Vorbeifahrt des Kraftfahrzeugs 14 an einer als Zielparklücke 16 geeigneten Parklücke das Umfeld des Kraftfahrzeugs 14 mittels Sensorik, wie insbesondere Radar, erfasst und vermessen werden. Insbesondere kann mittels der elektronischen Recheneinrichtung 20 ermittelt werden, dass der manuelle Parkvorgang gestartet wird, wenn das Kraftfahrzeug 14 angehalten wird und/oder ein Fahrtrichtungsanzeiger des Kraftfahrzeugs 14 aktiviert wird und/oder eine Parktaste des Kraftfahrzeugs 14 betätigt wird und/oder das Kraftfahrzeug 14 einlenkt und/oder eine Geschwindigkeit des Kraftfahrzeugs 14 unter einen vorgegebenen Grenzwert sinkt.

Das mittels der Sensoren erfasste Umfeld des Kraftfahrzeugs 14 wird in die unterschiedlichen Bereiche eingeteilt. In dem ersten Bereich 22 ist ein Erreichen der Zielparklücke 16 für das Kraftfahrzeug 14 gut möglich, wobei eine Lenkunterstützung durch Aufbringen des Lenkmoments auf die Lenkeinrichtung unterbleibt. Bei einer Anordnung des Kraftfahrzeugs 14 mit seiner Position 18 in dem zweiten Bereich 24 ist ein Erreichen der Zielparklücke 16 noch möglich, es wird jedoch das wenigstens eine Lenkmoment für ein Unterstützen des Fahrers auf die Lenkeinrichtung des Kraftfahrzeugs 14 aufgebracht. Bei einer Anordnung des Kraftfahrzeugs 14 mit seiner Position 18 in dem dritten Bereich 26 ist ein Erreichen der Zielparklücke 16 in einem Zug nicht möglich und eine Lenkunterstützung unterbleibt. Die entsprechenden ermittelten Bereiche können in Form einer Heat Map oder einer Wertetabelle in der elektronischen Recheneinrichtung 20 hinterlegt werden. Bei einer Bewegung des Kraftfahrzeugs 14 können mit ausreichend großer Abtastrate, beispielsweise nach Zurücklegen einer vorgegebenen Strecke, die Bereiche neu ermittelt werden. Dies ist insbesondere vorteilhaft, da sich die Bereiche abhängig von Lenkbewegungen des Kraftfahrzeugs 14 kontinuierlich verändern können. Zur Begrenzung eines Rechenaufwandes können weiter vom Kraftfahrzeug 14 entfernte Bereiche mit gröberer Auflösung ermittelt werden. Zum Ermitteln der jeweiligen Bereiche können das erfasste Umfeld des Kraftfahrzeugs 14 und/oder Fahrzeugabmessungen des Kraftfahrzeugs 14 und/oder ein aktueller Lenkeinschlag und/oder ein maximaler Lenkeinschlag des Kraftfahrzeugs 14 und/oder eine Einstellung eines Gangwahlhebels des Kraftfahrzeugs 14 und/oder vorzuhaltende Sicherheitsabstände zu Hindernissen und/oder komfort- beziehungsweise fahrzeugspezifische Einstellungen des Kraftfahrzeugs 14 herangezogen werden. Zusätzlich zur Position 18 des Kraftfahrzeugs 14 in den jeweiligen Bereichen kann für das zum Unterstützen des Fahrers auf die Lenkeinrichtung aufzubringende Lenkmoment ein momentaner Lenkeinschlag relevant sein. Ist ein notwendiger Lenkeinschlag zum Erreichen der Zielparklücke 16 erreicht, dann unterbleibt das Aufbringen des weiteren Lenkmoments auf die Lenkeinrichtung des Kraftfahrzeugs 14.

In der Umgebung des Kraftfahrzeugs 14 kann ein Sicherheitsabstand zu Fahrzeugen 12 und/oder Pfosten und/oder Laternen und/oder dynamischen Objekten wie Fußgängern vorgegeben sein, welcher von dem Kraftfahrzeug 14 einzuhalten ist. Der jeweilige vorgegebenen Sicherheitsabstand kann von einer Einsehbarkeit des jeweiligen Objekts abhängen oder von einer Übersichtlichkeit der Zielparklücke 16 abhängen.

In Fig. 4b ist ein zweiter Zug eines dreizügigen Einparkmanövers dargestellt. Hierbei kann der Fahrer beim manuellen Parkvorgang des Kraftfahrzeugs 14 unterstützt werden, indem je nach Anordnung der Position 18 des Kraftfahrzeugs 14 relativ zu den Bereichen das wenigstens eine Lenkmoment auf die Lenkeinrichtung des Kraftfahrzeugs 14 aufgebracht wird oder das Aufbringen des Lenkmoments auf die Lenkeinrichtung des Kraftfahrzeugs 14 unterbleibt.

Insgesamt zeigt die Erfindung, wie mittels eines Algorithmus ein Fahrer des Kraftfahrzeugs 14 durch ein temporäres Zusatzlenkmoment 28 unterstützt werden kann.

### Bezugszeichenliste

- 10: Parkfläche
- 12: Fahrzeug
- 14: Kraftfahrzeug
- 16: Zielparklücke
- 18: Position
- 20: elektronische Recheneinrichtung
- 22: erster Bereich
- 24: zweiter Bereich
- 26: dritter Bereich
- 28: Zusatzlenkmoment
- 30: Fahrbereich

## Patentansprüche

1. Verfahren zum Unterstützen eines Fahrers bei einem manuellen Parkvorgang eines Kraftfahrzeugs (14), bei welchem mittels einer elektronischen Recheneinrichtung (20)
- eine Zielparklücke (16) und eine Position (18) des Kraftfahrzeugs (14) ermittelt werden,
- wenigstens eine Fahreinstellung des Kraftfahrzeugs (14) ermittelt wird,
- eine Erreichbarkeit der Zielparklücke (16) mit der wenigstens einen ermittelten Fahreinstellung ausgehend von der Position (18) ermittelt wird, und
- wenn ermittelt wird, dass die Zielparklücke (16) bei der wenigstens einen ermittelten Fahreinstellung ausgehend von der Position (18) unerreichbar ist, durch Aufbringen wenigstens eines Lenkmoments (28) auf eine Lenkeinrichtung des Kraftfahrzeugs (14) eine durch den Fahrer ausgelöste Betätigung der Lenkeinrichtung unterstützt wird.

2. Verfahren nach Anspruch 1,
**dadurch gekennzeichnet, dass**
als jeweiliges Lenkmoment (28) ein eine Lenkbewegung verstärkendes Lenkmoment (28) oder eine Lenkbewegung erschwerendes Lenkmoment (28) auf die Lenkeinrichtung aufgebracht wird.

3. Verfahren nach Anspruch 1 oder 2,
**dadurch gekennzeichnet, dass**
- in Abhängigkeit von der wenigstens einen ermittelten Fahreinstellung eine Umgebung des Kraftfahrzeugs (14) in wenigstens zwei unterschiedliche Bereiche eingeteilt wird, wobei der erste Bereich (22) die Erreichbarkeit der Zielparklücke (16) für die wenigstens eine ermittelte Fahreinstellung charakterisiert und der zweite Bereich (24) eine Unerreichbarkeit der Zielparklücke (16) für die wenigstens eine ermittelte Fahreinstellung charakterisiert,
- ermittelt wird, in welchem der Bereiche sich das Kraftfahrzeug (14) befindet, und
- das Bereitstellen des Lenkmoments (28) für die Lenkeinrichtung ausgelöst wird, wenn festgestellt wird, dass sich das Kraftfahrzeug (14) in dem zweiten Bereich (24) befindet, wobei das Bereitstellen des Lenkmoments (28) unterbleibt, wenn festgestellt wird, dass sich das Kraftfahrzeug (14) in dem ersten Bereich (22) befindet.

4. Verfahren nach Anspruch 3,
**dadurch gekennzeichnet, dass**
in der Umgebung des Kraftfahrzeugs (14) zusätzlich ein dritter Bereich vorgesehen wird, welcher die Unerreichbarkeit der Zielparklücke (16) unabhängig von der ermittelten Fahreinstellung in einem Zug charakterisiert.

5. Verfahren nach Anspruch 3 oder 4,
**dadurch gekennzeichnet, dass**
mittels einer Ausgabeeinrichtung die ermittelten Bereiche ausgegeben werden.

6. Verfahren nach einem der Ansprüche 3 bis 5,
**dadurch gekennzeichnet, dass**
wenigstens einer der Bereiche in Abhängigkeit von einem einzuhaltenden vorgegebenen Sicherheitsabstand zu wenigstens einem ermittelten Objekt eingeteilt wird.

7. Verfahren nach einem der vorhergehenden Ansprüche,
**dadurch gekennzeichnet, dass**
das Bereitstellen des Lenkmoments (28) unterbleibt, wenn ermittelt wird, dass die Zielparklücke (16) ausgehend von der Position (18) des Kraftfahrzeugs (14) unabhängig von der ermittelten Fahreinstellung unerreichbar ist.

8. Verfahren nach einem der vorhergehenden Ansprüche,
**dadurch gekennzeichnet, dass**
bei einer ermittelten Anpassung der wenigstens einen ermittelten Fahreinstellung und/oder der Position (18) des Kraftfahrzeugs (14), die ermittelte Erreichbarkeit der Zielparklücke (16) angepasst wird.

9. Verfahren nach einem der vorhergehenden Ansprüche,
**dadurch gekennzeichnet, dass**
als die Fahreinstellung ein eingestellter Lenkeinschlag und/oder ein maximal möglicher Lenkeinschlag und/oder ein eingelegter Gang und/oder ein Radstand des Kraftfahrzeugs (14) ermittelt wird.

10. Kraftfahrzeug (14), welches dazu eingerichtet ist, ein Verfahren nach einem der vorhergehenden Ansprüche durchzuführen.
